Europäisches Patentamt

European Patent Office

Office européen des brevets

(11) Publication number: **0 342 328**
A1

## EUROPEAN PATENT APPLICATION

(21) Application number: 89104167.5

(22) Date of filing: 09.03.89

(51) Int. Cl.⁴: **B60K 17/24**

(30) Priority: 17.03.88 GB 8806398

(43) Date of publication of application:
23.11.89 Bulletin 89/47

(84) Designated Contracting States:
DE ES FR GB IT

(71) Applicant: GKN CARDANTEC INTERNATIONAL
GESELLSCHAFT FUR ANTRIEBSTECHNIK
MBH
Westendhof 5
D-4300 Essen 1(DE)

(72) Inventor: Fisher, Leslie George
49 Elmwood Road Streetly
Sutton Coldfield Birmingham B74 2DD(GB)

(74) Representative: Harwardt, Günther, Dipl.-Ing.
et al
HARWARDT NEUMANN PATENTANWÄLTE
Scheerengasse 2 Postfach 1455
D-5200 Siegburg 2(DE)

(54) Drive shaft assembly.

(57) A drive shaft assembly comprises a shaft element (10) with a universal joint (11, 12) at each end, and a support member (23), preferably of tubular form surrounding the shaft element, with bearing means (24, 25, 26) adjacent the ends of the shaft element and between the ends, the support member being held against rotation. The shaft element is thus supported against bending and "whirling" at high rotational speeds, enabling it to be of lighter construction than if it depended on its own stiffness for stability.

## DRIVE SHAFT ASSEMBLY

This invention relates to a drive shaft assembly. A shaft assembly according to the invention is intended primarily for use in a motor vehicle as the shaft usually known as the propeller shaft, extending lengthwise of the vehicle between an engine unit and a driving axle or axles, but it will be appreciated that the shaft is more widely applicable where similar or analogous requirements, as described hereafter, arise.

In some designs of motor vehicle very long propeller shafts are required. It is common in such a vehicle to provide the propeller shaft, which of course has a universal joint at each end, with a further universal joint and a support bearing positioned generally mid-way along the shaft. One reason for this is to avoid a phenomenon known as "whirling" of the shaft, which is that, at high rotational speeds, the shaft becomes bent out of the straight condition and central parts of the shaft describe a circular path. This condition is potentially destructive. To increase the bending stiffness of a very long shaft to resist whirling would make the shaft extremely heavy and therefore it has been a preferred solution to fit the centre bearing and universal joint as above described, so that individual parts of the shaft are short enough for whirling not to be a problem.

In some installations, however, a centre bearing and universal joint cannot readily be accommodated, and accordingly it is the object of the present invention to provide a shaft assembly which enables the whirling problem to be overcome in a more convenient manner.

According to the invention, we provide a drive shaft assembly comprising a shaft element having torque transmitting connection with a respective universal joint at each end thereof, and a support member extending lengthwise of the shaft element and provided with bearing means for supporting the shaft element at respective positions adjacent said ends thereof and generally mid-way between said ends, the support member being arranged to be held against rotation.

Preferably the support member is of tubular form, surrounding the shaft element. It may also be connected to a further member which encloses the universal joint at one end of the shaft element.

Although, in a shaft assembly according to the invention, the support member adds to the weight of the shaft element, the total weight of the assembly can still be less than that which the shaft element would require if it were to be sufficiently stiff to resist whirling without the additional support given by the bearing means generally in the mid-region of the shaft element. The overall diameter of a tubular support member within which the shaft element is disposed may need only to be of the same order as, or possibly even less than, the diameter an unsupported shaft element would require to be to give it sufficient bending stiffness.

The bearing means between the ends of the shaft element may contact the shaft element to support it at all times, or may be spaced therefrom to provide support only when an incipient whirling condition exists.

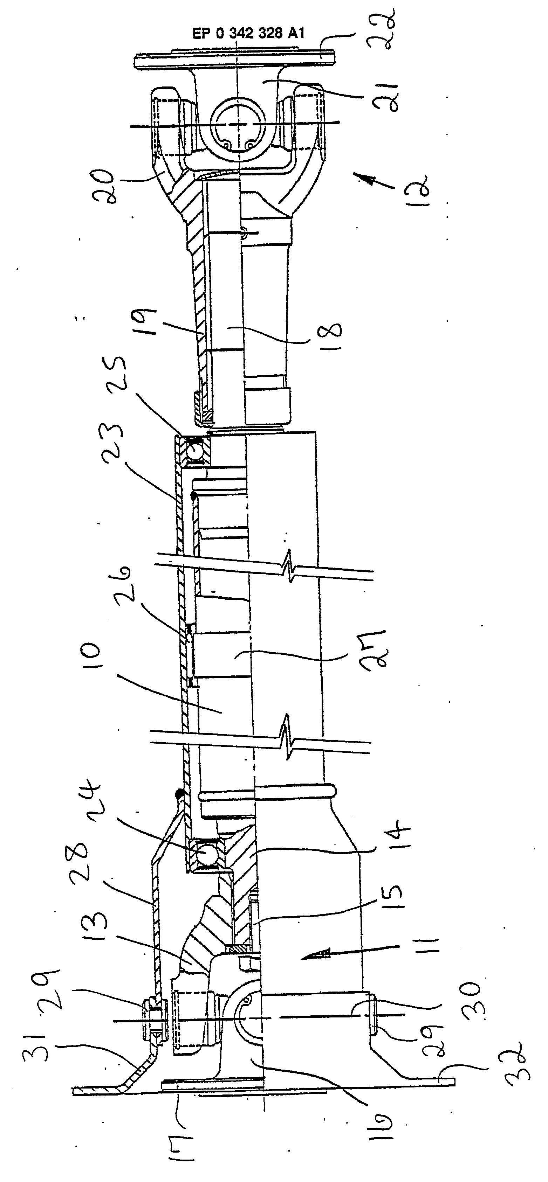

The invention will now be described by way of example with reference to the accompanying drawing, which is an elevation, partly in section, of a shaft assembly according to the invention.

The illustrated shaft assembly is intended to be used as the propeller shaft in a motor vehicle. It comprises a shaft element 10 of tubular form and Hookes universal joints, indicated generally at 11, 12, at the ends thereof. Both these universal joints are of generally known construction, one of the yokes 13 of the joint 11 having torque transmitting connection with the shaft element 10 by way of a spigot 14 which is welded to the shaft element 10, and has splined engagement with the yoke 13, retained by a bolt 15. The other yoke, 16, of the joint 11 is integral with a drive flange 17 for connection to, e.g., a gearbox output member. At the other end of shaft element 10, there is a welded connection to an externally splined element 18 which axially slidably engages within a muff 19 integral with a yoke 20 of the joint 12, to provide for changes in length of the shaft assembly in use. The other yoke 21 of the joint 12 has a drive flange 22 for connection to, e.g., an input element of an axle/differential unit.

The shaft element 10 is surrounded by a tubular support member 23. A first bearing 24 at one end of the support member 23 has its inner race received on the spigot 14 and its outer race held within an end part of the support member. At the opposite end of the support member, a bearing 25 has its inner race received on the element 18 and its outer race held within the support member. Approximately mid-way between the ends of the shaft element, a needle roller bearing assembly 26 has needle rollers which run directly on an external surface 27 of the shaft element 10 and in the interior of the support member 23.

The support member 23 is welded to a further tubular member 28 which extends over the yoke 13 of the joint 11. The member 28 is connected, by pivots 29 for pivoting about an axis 30, to a frusto-conical member 31 leading into a flange 32. The flange 32 is intended to be connected to, e.g., the casing of a gearbox of which an output member is connected to the drive flange 17.

By virtue of its connection to a stationary part of the vehicle such as a gearbox casing, by way of the members 28, 31, the support member 23 is prevented from rotating with the shaft element 10. The pivotal connection about the axis 30, which is coincident with the bending centre of the universal joint 11, permits shaft articulation with vehicle suspension movement in use. The support of the shaft element relative to the supporting member 23 by the three spaced bearings 24, 25, 26 means that the shaft element resists whirling, even if the shaft element is long and rotating at a high speed. Although the support member 23 is of greater diameter than the shaft element 10, it is not necessarily of as great a diameter as that which the shaft element would require to give it sufficient bending stiffness to resist whirling, if the shaft element were not supported in its centre region by the bearing 26.

Additionally, the support member and associated members have the benefit of guarding the shaft element, the joint 11, and associated parts, and protecting them against ingress of dirt. The shaft element would be protected against whirling, of course, if members 28 and 31 were not present, in which case some other means for holding the support member 23 against rotation would be provided. As an alternative to the tubular support member a skeletal structure or frame could be provided, with suitable bearings to support the shaft element.

Although in the above described embodiment the shaft element 10 is supported by needle roller bearing assembly 26 in its mid-region, it would alternatively be possible for a plain bearing to be provided here. Such a bearing need not contact the shaft element to support it at all times, but could be slightly spaced from the shaft element when the latter is straight. If the shaft element is overspeeded, however, such that the whirling condition could otherwise develop, any bending of the shaft element will cause it to contact the bearing and further bending will be prevented. The bearing can be of a relatively light duty type, since the condition of high shaft speed will not usually exist for a prolonged period.

## Claims

1. A drive shaft assembly comprising a shaft element having torque transmitting connection with a respective universal joint at each end thereof, and a support member extending lengthwise of the shaft element and provided with bearing means for supporting the shaft element at respective positions adjacent said ends thereof and generally mid-way between said ends, the support member being arranged to be held against rotation.

2. A drive shaft assembly according to Claim 1 wherein said support member is of tubular form, surrounding the shaft element.

3. A drive shaft assembly according to Claim 2 wherein the support member is connected to a further member enclosing one of said universal joints.

4. A drive shaft assembly according to any one of the preceding claims wherein said bearing means between the ends of the shaft element contacts the shaft element at all times to support it.

5. A drive shaft assembly according to any one of Claims 1 to 3 wherein said bearing means between the ends of the shaft element is spaced from the shaft element, to support the latter only when an incipient whirling condition exists.

6. A drive shaft assembly substantially as hereinbefore described with reference to the accompanying drawing.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-E- 81 638 (RHEINMETALL)<br>* Whole document * | 1,2,4 | B 60 K 17/24 |
| A | US-A-2 092 291 (OLSEN)<br>* Page 2, lines 20-73; figures * | 1-4 | |
| A | FR-A-2 271 444 (GLAENZER SPICER)<br>* Page 12, lines 17-24; figure 12 * | 1,2 | |

TECHNICAL FIELDS
SEARCHED (Int. Cl.4)

B 60 K
F 16 C

The present search report has been drawn up for all claims

| Place of search | Date of completion of the search | Examiner |
|---|---|---|
| THE HAGUE | 17-08-1989 | MENDE H. |

EPO FORM 1503 03.82 (P0401)